Europäisches Patentamt

European Patent Office

Office européen des brevets

(19)

(11) Numéro de publication : **0 018 288 B1**

(12) **FASCICULE DE BREVET EUROPÉEN**

(45) Date de publication du fascicule du brevet :
16.02.83

(51) Int. Cl.³ : **B 23 K 26/02**, G 01 N 21/63

(21) Numéro de dépôt : 80400517.1

(22) Date de dépôt : 17.04.80

(54) **Procédé et dispositif de réglage de l'impact sur une cible d'un faisceau de lumière monochromatique émis par une source laser.**

(30) Priorité : 18.04.79 FR 7909763

(43) Date de publication de la demande :
29.10.80 Bulletin 80/22

(45) Mention de la délivrance du brevet :
16.02.83 Bulletin 83/07

(84) Etats contractants désignés :
CH DE GB LI

(56) Documents cités :
US A 3.710.788
NATURWISSENSCHAFTEN, Vol. 57, No. 1, 1970
BERLIN (DE) A. FELSKE et al. : « Optische Spektralanalyse mit Laser-Lichtquellen », pages 428-434.
SPECTROCHIMICA ACTA. Vol. 30 b, 1974. pp. 230-231.

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Jeloy, Jean-François**
**Labis de Dessous**
**F-38330 Saint Ismier (FR)**

(74) Mandataire : **Mongrédien, André et al**
**c/o Brevatome 25, rue de Ponthieu**
**F-75008 Paris (FR)**

Jouve, 18, rue St-Denis, 75001 Paris, France

Procédé et dispositif de réglage de l'impact sur une cible d'un faisceau de lumière monochromatique émis par une source laser

La présente invention concerne un procédé et un dispositif de réglage de l'impact sur une cible, d'un faisceau de lumière, notamment monochromatique, émis par une source, et notamment par une source laser.

Ce procédé et ce dispositif permettant, notamment en spectrométrie laser, de régler avec précision la position et la dimension de l'impact d'un faisceau laser monochromatique, sur une cible. Il permet également de maintenir dans une position fixe dans l'espace, l'impact du faisceau laser sur la cible.

On sait qu'en spectrométrie laser, il est nécessaire de déterminer avec une grande précision la position sur la cible et la dimension de l'impact d'un faisceau laser bombardant cette cible, afin de repérer le point analysé et de maîtriser les dimensions du volume de matière vaporisée par ce bombardement, et ainsi, de maîtriser l'émission de particules résultant de cet impact. Ce réglage doit de plus, pouvoir être effectué pour plusieurs longueurs d'ondes, puisque les résultats de l'analyse spectrométrique résultant de l'impact du faisceau laser sur la cible sont liés à la longueur d'onde de la lumière du faisceau de bombardement.

Dans le cas particulier de la spectrométrie de masse à laser, ce réglage doit enfin permettre à la source d'ions qui extrait du plasma laser les ions envoyés dans le spectromètre, de fonctionner constamment dans de bonnes conditions ; ceci exige une position relative invariable de l'impact laser et de l'optique ionique de la source d'ions du spectromètre.

La spectrométrie laser consiste à produire des microplasmas à partir d'une surface solide, excitée localement par un faisceau de lumière laser focalisée. Les microplasmas ainsi produits sont ensuite analysés à l'aide d'un spectromètre, notamment en spectrométrie de masse. Le dispositif de focalisation du faisceau laser est généralement constitué par une lentille optique de faible grossissement, dont la position du point focal dépend de la longueur d'onde du faisceau de lumière laser monochromatique. Ainsi, par exemple, cette distance focale est plus grande pour une lumière laser rouge ($\lambda = 0,6943\ \mu$) que pour une lumière ultraviolette ($\lambda = 0,347\ \mu$). La production des microplasmas par focalisation de la lumière laser peut être réalisée soit par incidence du faisceau laser sur la surface d'une cible, entraînant l'émission d'un microplasma du même côté de cette surface que le faisceau laser (par réflexion), soit par incidence du faisceau sur la surface d'une cible mince, entraînant l'émission d'un microplasma par l'autre face de la cible (par transmission). Le spectre d'énergie des particules émises dépend de la position du point focal du faisceau de lumière laser, par rapport à la surface à étudier. Pour que l'émission de microplasmas soit efficace par réflexion, il est nécessaire que le point de focalisation du faisceau laser se situe légèrement au-devant de la surface, et non sur celle-ci.

Il est connu, pour effectuer la mise au point des moyens de focalisation du faisceau laser, d'utiliser un éclairage de lumière visible de l'objet. Cette mise au point est réalisée à l'aide de moyens optiques pour lesquels le trajet de la lumière visible qui sert au réglage de la focalisation est identique à celui du faisceau laser ; ceci a pour grave inconvénient de rendre incertain un réglage optimal de la position de focalisation du faisceau laser monochromatique utilisé (lumière ultraviolette ou infrarouge par exemple). En effet, comme on l'a vu plus haut, la position de focalisation dépend de la longueur d'onde de la lumière qui traverse les moyens de focalisation, et il en résulte que l'on ne peut régler correctement en lumière blanche la position de focalisation à obtenir en lumière laser monochromatique. C'est le cas par exemple, de l'appareil LMA 10 commercialisé par la Société JENOPTIK JENA GmbH et décrit dans la revue « Spectrochimica Acta » 1974 — volume 30B — page 231.

Les dimensions du volume de matière qui sera vaporisée ne peuvent pas être prédéterminées.

Aucun procédé ou dispositif actuellement connus ne permettent de résoudre en même temps le problème de la localisation précise du lieu d'impact du faisceau laser sur la surface de la cible à étudier, et le problème du réglage de la position de focalisation du faisceau laser ; les solutions à ces deux problèmes permettraient en effet de déterminer par avance les conditions optimales d'interaction entre le faisceau laser et la matière à étudier.

Le seul problème actuellement résolu est celui du réglage de la localisation de l'impact du faisceau laser sur la cible. Cette localisation peut être effectuée avec une grande exactitude lorsque les trajets optiques du faisceau laser de bombardement et du faisceau de lumière blanche utilisée dans les moyens optiques de localisation de l'impact sont confondus. Ces faisceaux peuvent aussi être confondus et coaxiaux, comme dans le brevet US-A-3 710 798.

Parmi les dispositifs connus utilisant cette technique de localisation mis au point pour la spectroscopie lumineuse, l'un deux comprend un objectif de focalisation du faisceau laser présentant un double miroir sphérique de renvoi du faisceau laser de bombardement et du faisceau de lumière blanche de localisation. Par un système à prisme escamotable, placé sur l'axe optique de l'objectif, le faisceau laser et le faisceau de lumière blanche présentant les mêmes axes optiques au niveau de l'incidence sur l'objet et il en résulte que la localisation du point de l'impact du faisceau laser est bien définie. Cependant, comme les longueurs d'onde et de lumière du faisceau laser et de la lumière blanche sont différentes, le dispositif ne permet pas de déterminer avec précision la position de focalisation du faisceau laser et donc les dimensions de l'impact de ce faisceau sur la cible ; en effet, puisque la distance de focalisation est différente en lumière monochromatique de celle obtenue en lumière blanche, les dimensions de l'impact obtenu en lumière monochromatique sont imprévisibles. Dans ce dispositif, la cible est portée par un support qui ne peut être déplacé que dans un plan perpendiculaire à la direction du faisceau laser. Ce dispositif est décrit dans la revue précitée, page 230. Un autre inconvénient des dispositifs connus est que, lorsque l'épaisseur de la cible à analyser varie, la position de la bouffée de plasma créée par l'impact laser varie ; ceci n'est pas gênant en spectroscopie lumineuse ; en spectroscopie de masse par contre, cette position n'est plus constamment adaptée au bon fonctionnement de la source d'ions du spectromètre de masse. Le diamètre de l'impact du faisceau sur la cible est prédéterminé en fonction de la longueur d'onde du faisceau laser par défocalisation et utilisation d'une série de diaphragmes de différents diamètres, liés à l'objectif de focalisation. Ce système est mal adapté à la spectrométrie de masse car les diaphragmes seraient difficiles à mettre en place ; en effet, l'objectif est alors contenu à l'intérieur d'une enceinte à vide qui ne peut être ouverte en cours d'expérience ; ceci est très gênant lorsque l'expérience exige d'utiliser successivement des faisceaux laser monochromatiques de longueurs d'onde différentes. De plus, ce dispositif ne permet pas d'obtenir une visée nette de l'échantillon, en cours d'expérience, puisque les faisceaux laser et les faisceaux de lumière blanche servant à la visée et à l'observation sont confondus sur une grande partie de leurs trajets.

La présente invention a pour but de remédier à ces inconvénients, et notamment de réaliser un dispositif et de mettre en œuvre un procédé de réglage de l'impact sur une cible, d'un faisceau de lumière monochromatique, émis par une source laser qui permettent en même temps d'assurer une bonne localisation de cet impact et de prédéterminer les dimensions de celui-ci. De plus, ce dispositif permet l'étude d'échantillons à des longueurs d'onde différentes, et il permet également une bonne observation du point d'impact du faisceau sur la cible, en cours d'expérience. Ces résultats sont obtenus grâce à des trajets optiques coaxiaux mais non confondus pour le faisceau laser et pour le faisceau de lumière blanche d'observation.

L'invention concerne un procédé de réglage de l'impact sur une cible d'un faisceau de lumière émis par une source, consistant à régler la position de l'impact en utilisant un faisceau de réglage de position dont le trajet optique est coaxial mais non confondu avec le faisceau de la source, caractérisé en ce qu'il consiste en outre à régler la dimension de l'impact en utilisant un autre faisceau dont le trajet est coaxial et partiellement confondu avec le faisceau de la source.

Selon une autre caractéristique du procédé, le faisceau de lumière de la source étant monochromatique, la position et la dimension de l'impact sont réglés en lumière blanche, le trajet optique du faisceau de réglage de localisation étant coaxial mais non confondu avec le trajet optique du faisceau de la source et le trajet optique du faisceau de réglage de dimension d'impact étant partiellement confondu avec le trajet optique du faisceau de la source.

Selon une autre caractéristique de ce procédé, on interpose sur le trajet optique du faisceau de réglage de dimension, une lentille de correction permettant d'obtenir, en lumière blanche, la dimension prédéterminée de l'impact désiré dans la lumière monochromatique choisie.

L'invention a aussi pour objet un dispositif de réglage de l'impact sur une cible, d'un faisceau de lumière émis par une source, comprenant un support de cible et des moyens pour le déplacer dans son plan, des moyens de focalisation du faisceau de lumière de la source sur la cible, des moyens de réglage de ces moyens de focalisation, des moyens d'émission d'un faisceau lumineux de réglage en direction de la cible, la localisation et la dimension de l'impact de ce faisceau de réglage sur la cible correspondant à la localisation et à la dimension prédéterminées de l'impact du faisceau de lumière de la source, des moyens optiques de visualisation pour localiser et régler la dimension de l'impact du faisceau de réglage, caractérisé en ce que les moyens d'émission du faisceau de réglage et de visualisation de la position de l'impact de ce faisceau de réglage sur la cible sont indépendants des moyens de focalisation du faisceau de lumière de la source, les chemins optiques du faisceau de lumière de la source et des moyens de visualisation de la position d'impact étant coaxiaux, et les chemins optiques des moyens de visualisation pour réglage de dimension d'impact et du faisceau de lumière de la source étant partiellement confondus.

Selon une autre caractéristique du dispositif, les moyens d'émission du faisceau de réglage et les moyens de visualisation de l'impact de ce faisceau sont fixes et sont associés à des moyens pour déplacer le support de cible, parallèlement au faisceau de la source et au faisceau de réglage.

Selon une autre caractéristique du dispositif, la source est une source de lumière monochromatique et le faisceau de réglage est un faisceau de lumière blanche.

Selon une autre caractéristique, les moyens de visualisation de la dimension de l'impact du faisceau de réglage sur la cible sont associés aux moyens de focalisation pour régler en lumière blanche la dimension de l'impact sur la cible.

Selon une autre caractéristique, les moyens de visualisation de la dimension d'impact sont associés à une lentille de correction qui permet d'obtenir en lumière blanche, et grâce aux moyens de réglage des moyens de focalisation, la dimension prédéterminée de l'impact désiré dans la lumière monochromatique choisie.

Selon une autre caractéristique, les moyens de visualisation de la position de l'impact du faisceau de réglage sur la cible sont constitués par une première lunette de visée associée à un objectif annulaire, une source de faisceau lumineux étant incorporée à cette lunette pour produire ledit faisceau de réglage en lumière blanche, les moyens de visualisation de la dimension de l'impact étant constitués par une deuxième lunette de visée recevant l'image de l'impact du faisceau de réglage, à travers les moyens de focalisation, l'oculaire de cette deuxième lunette étant muni de ladite lentille de correction.

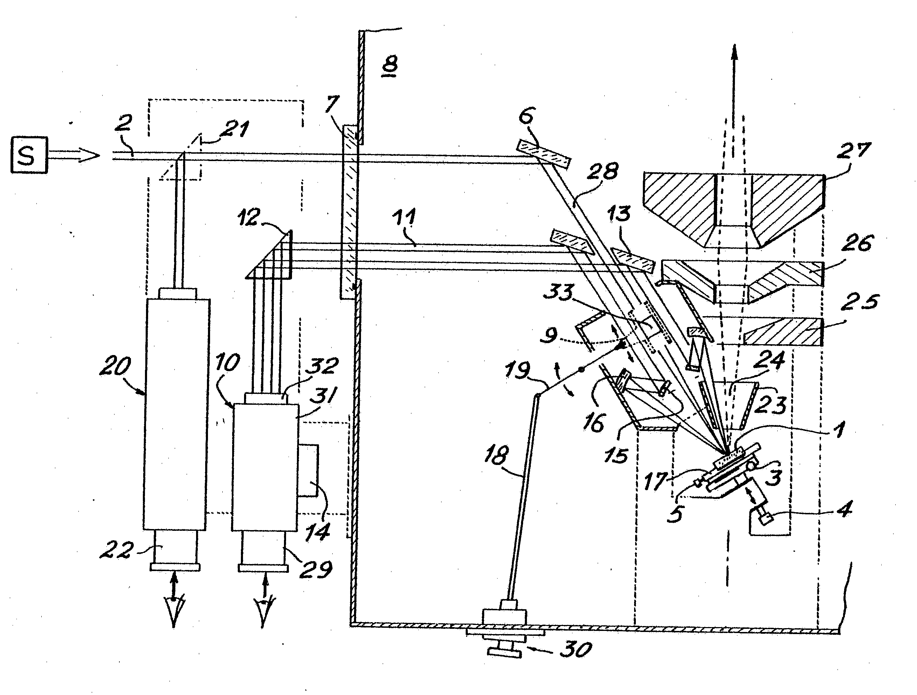

D'autres caractéristiques et avantages de l'invention ressortiront mieux de la description qui va suivre, donnée à titre purement illustratif, en référence à la figure schématique annexée représentant en coupe partielle un dispositif conforme à l'invention.

Le dispositif conforme à l'invention, représenté sur la figure permet de régler l'impact sur une cible 1 d'un faisceau de lumière monochromatique émis par une source laser S. Cette cible est placée sur un support 17 qui peut être déplacé dans trois directions perpendiculaires, grâce à des moyens de déplacement constitués par des vis micrométriques, représentées en 3, 4, 5. Le faisceau laser 2 est renvoyé par un miroir 6, après avoir traversé le hublot transparent 7 d'une enceinte à vide 8, dans laquelle sont placés la cible 1 à étudier ainsi que divers moyens optiques et électriques qui seront décrits plus loin en détail. Le faisceau laser 2 est dévié par le miroir 6 de manière que l'axe de ce faisceau soit normal à la surface de la cible 1. Le dispositif comprend également des moyens de focalisation 9 du faisceau laser, et des moyens 10 qui permettent d'émettre, en direction de la cible, à travers le hublot 7, un faisceau lumineux annulaire 11 de réglage ; ce faisceau de réglage est renvoyé par le prisme 12 et par le miroir incliné 13, percé d'une ouverture permettant le passage du faisceau laser. Ce faisceau lumineux de réglage est un faisceau de lumière blanche et, comme on le verra par la suite, la localisation et la dimension de l'impact de ce faisceau lumineux sur la cible correspondant à la localisation et à la dimension prédéterminée de l'impact du faisceau laser sur cette cible. Les moyens d'émission du faisceau lumineux de réglage et de visualisation de la position de l'impact de ce faisceau lumineux sur la cible, sont constitués par une première lunette de visée 31 dont l'objectif est représenté en 32, et par une source lumineuse 14, incorporée à cette lunette pour produire le faisceau lumineux de réglage 11. Cette lunette de visée est associée à un objectif annulaire comprenant deux miroirs sphériques annulaires 15, 16, qui permettent de laisser passer le faisceau laser tout en permettant au faisceau annulaire 11 de lumière blanche, de venir se focaliser sur l'axe du faisceau laser 2. Ainsi, le faisceau laser et le faisceau lumineux de réglage de la localisation de l'impact sur la cible 1 sont partiellement coaxiaux. La localisation du point d'impact du faisceau laser sur la cible est réalisée à partir de la localisation du point d'impact du faisceau de lumière blanche sur cette cible, grâce à la coaxialité de ces faisceaux. Les moyens de focalisation 9 du faisceau laser sont constitués par une lentille 33 ; leur position sur l'axe du faisceau est réglable par l'intermédiaire d'un système à leviers 18, 19, permettant de déplacer la lentille 9 en translation le long de l'axe du faisceau laser. Ce déplacement de la lentille permet de régler la dimension de l'impact du faisceau laser sur la cible, à partir de la dimension de l'impact du faisceau de lumière blanche sur cette cible. Ce réglage de dimension est contrôlé visuellement par des moyens de visualisation de la dimension de l'impact, constitués par une deuxième lunette de visée 20, qui permet de régler le diamètre de l'impact du faisceau laser sur la cible, grâce au mouvement du support 17 commandé par les moyens de déplacement 4. Ce mouvement permet, grâce à une visée en lumière blanche dans la lunette 31, de placer la cible au foyer de l'objectif annulaire 15, 16. La position de ce foyer est adaptée à la source d'ions du spectromètre de masse. Le réglage de la dimension de cet impact est assuré par un déplacement de la lentille 33 de focalisation, commandé par les leviers 18, 19 à partir de la vis micrométrique 30, extérieure à l'enceinte 8. Les chemins optiques du faisceau laser et du faisceau parvenant à la deuxième lunette de visée 20 sont partiellement confondus et traversent la lentille de focalisation 9 ; les chemins optiques des faisceaux parvenant aux première et deuxième lunettes de visée qui permettent la localisation de l'impact et le réglage de sa dimension sont coaxiaux. La deuxième lunette de visée 20 reçoit l'image de l'impact sur la cible du faisceau lumineux de réglage, à travers la lentille de focalisation 33 et un prisme escamotable 21. L'oculaire 22 de la deuxième lunette de visée 20 comprend une lentille convergente ou divergente, non représentée qui permet d'obtenir en lumière blanche, une image de l'impact, de même dimension que celle que présente cet impact avec un faisceau de lumière monochromatique de même longueur d'onde que celle du faisceau émis par le laser de bombardement. A cet effet et afin de faciliter les réglages lorsque la cible doit être bombardée par des faisceaux successifs de longueurs d'onde différentes, les lentilles de correction de l'oculaire 22 peuvent être montées sur un barillet (non représenté) permettant de placer en regard de l'oculaire, la lentille correspondant à la longueur d'onde de la lumière monochromatique émise par le laser. Enfin, la source laser S comprend d'une part un laser émettant le faisceau de lumière monochromatique de traitement ou de bombardement de la cible, et d'autre part, un autre laser dit « d'alignement », émettant un faisceau de lumière visible spatialement confondu avec le faisceau de traitement ; le faisceau émis par ce laser d'alignement permet de contrôler la localisation correcte de l'impact du faisceau du laser de traitement sur la cible, lorsque tous les réglages sont effectués. On remarquera sur la figure que la protection de la lentille de focalisation contre des projections éventuelles de particules lors de l'impact du faisceau de bombardement sur la cible est assurée par l'objectif annulaire 15, 16 qui est lui-même protégé de ces projections. En effet, la face active du miroir 15 est opposée à la cible ; la face active du miroir 16 est éloignée de la cible et elle est protégée partiellement par le miroir 15.

Le dispositif de l'invention étant principalement destiné à la spectrométrie, il est prévu, à proximité de la cible, une chambre d'expansion constituée par un tube conique 23 qui permet de collecter les particules, telles que des ions, contenues dans le faisceau microplasmatique de particules 24 ; ce faisceau est ensuite concentré et accéléré grâce à des électrodes 25, 26 et 27, portées à des potentiels positifs par exemple, par rapport à un potentiel de référence ; ce potentiel de référence peut être le potentiel de l'enceinte 8. Les particules ainsi concentrées et accélérées sont ensuite dirigées vers un spectromètre non représenté.

Le dispositif qui vient d'être décrit fonctionne de la manière suivante : la source lumineuse de la première lunette de visée 10 est allumée tandis que le laser de bombardement est éteint. On effectue alors un réglage de la position de l'impact sur la cible, vue à travers cette première lunette de visée, grâce à un déplacement du support 17 dans un plan perpendiculaire à l'axe du faisceau 28 du laser d'alignement. On localise ainsi l'emplacement de l'impact qu'aura le faisceau du laser de bombardement sur la cible. On peut éventuellement, pour compenser les variations d'épaisseur de la cible et d'obtenir un plasma laser dans une position invariable par rapport à la source d'ions, déplacer le support de cible dans une direction parallèle à l'axe du faisceau du laser d'alignement, de manière que le faisceau annulaire de lumière blanche, de la lunette de visée 31 converge sur la surface de la cible. On déplace alors la lentille 33 dans une direction parallèle à l'axe du faisceau laser, de manière à distinguer dans l'oculaire 22 de la deuxième lunette 20 une image nette de la surface de la cible éclairée en lumière blanche par le faisceau émis par la première lunette de visée. Le réglage de la dimension du futur impact laser est assuré, après introduction dans l'oculaire 22 de la deuxième lunette 20, de la lentille de correction en lumière monochromatique, par un déplacement en translation de la lentille 33, sous la commande des leviers 18, 19, actionnés par la vis micrométrique 30 (le réglage de dimension peut bien entendu être effectué directement avec la lentille de correction choisie.). Enfin, il peut être nécessaire de déplacer très légèrement le support 17 dans un plan perpendiculaire à l'axe du faisceau laser, de manière à ajuster l'image de l'impact du faisceau d'alignement dont le trajet optique est confondu avec celui du laser de bombardement, avec le réticule de l'oculaire 29 de la première lunette de visée 31. A cet effet, le laser d'alignement est donc allumé et cette dernière vérification permet de retoucher le réglage du support 17, de manière à contrôler avant expérience, la localisation de l'impact. Après ces opérations de réglage, le dispositif est prêt pour réaliser les mesures spectrométriques ; le laser d'alignement est éteint et le laser de bombardement est allumé. Grâce à ces réglages, on a la certitude d'obtenir sur la cible un impact du faisceau du laser de bombardement dont la position et la dimension sont prédéterminées. Alors que le laser d'alignement fonctionnait de manière continue en lumière visible, le laser de bombardement fonctionne de manière pulsée et un atténuateur de lumière laser peut être disposé sur le trajet du faisceau de bombardement, de manière à prédéterminer l'épaisseur de matériau de la cible qui doit être prélevée.

Le dispositif conforme à l'invention, qui vient d'être décrit, permet bien d'atteindre les buts mentionnés plus haut et notamment d'obtenir une grande précision dans la localisation et la focalisation du faisceau de bombardement, de rendre possible l'observation de la zone d'impact de manière continue au cours du bombardement, d'éviter les perturbations que crée dans les dispositifs de l'art antérieur l'expansion du microplasma au voisinage de la lentille de focalisation et l'objectif de visée et enfin, d'éviter par une position privilégiée des deux lentilles, la pulvérisation de la matière émise lors du bombardement sur la lentille de focalisation et l'objectif de visée.

Il est bien évident que dans le dispositif qui vient d'être décrit, les moyens utilisés auraient pu être remplacés par des moyens équivalents sans sortir du cadre de l'invention.

**Revendications**

1. Procédé de réglage de l'impact sur une cible (1) d'un faisceau (2) de lumière émis par une source (S), consistant à régler la position de l'impact en utilisant un faisceau (11) de réglage de position dont le trajet optique est coaxial mais non confondu avec le faisceau de la source (S), caractérisé en ce qu'il consiste en outre à régler la dimension de l'impact en utilisant un autre faisceau (28) dont le trajet est coaxial et partiellement confondu avec le faisceau (2) de la source.

2. Procédé de réglage selon la revendication 1, caractérisé en ce que le faisceau (2), de lumière de la source (S) étant monochromatique, la position et la dimension de l'impact sont réglées en lumière blanche, le trajet optique du faisceau (11) de réglage de localisation étant coaxial mais non confondu avec le trajet optique du faisceau de la source (S) et le trajet optique du faisceau (28) de réglage de dimension d'impact étant partiellement confondu avec le trajet optique (2) du faisceau de la source (S).

3. Procédé de réglage selon la revendication 2, caractérisé en ce que l'on interpose sur le trajet optique du faisceau (28), de réglage de dimension, une lentille de correction (22) permettant d'obtenir, en lumière blanche, la dimension prédéterminée de l'impact désiré dans la lumière monochromatique choisie.

4. Dispositif de réglage de l'impact sur une cible, d'un faisceau de lumière émis par une source (S), comprenant un support (17) de cible (1), et des moyens (3, 4, 5) pour le déplacer dans son plan, des moyens de focalisation (33) du faisceau (2) de lumière de la source (S) sur la cible (1), des moyens de réglage (9, 18, 19, 30) de ces moyens de focalisation, des moyens d'émission (10) d'un faisceau lumineux (11) de réglage en direction de la cible (1), la localisation et la dimension de l'impact de ce faisceau de réglage (11) sur la cible (1), correspondant à la localisation et à la dimension prédéterminées de l'impact du faisceau (2) de lumière de la source (S), des moyens optiques (10, 20) de visualisation pour localiser et régler la dimension de l'impact du faisceau de réglage, caractérisé en ce que les moyens (10) d'émission du faisceau de réglage (11) et de visualisation de la position de l'impact de ce faisceau de réglage sur la cible sont indépendants des moyens de focalisation (33) du faisceau de lumière de la source (S), les chemins optiques (2, 11) du faisceau de lumière de la source (S) et des moyens de visualisation (10) de la position d'impact étant coaxiaux mais non confondus et les chemins optiques (2, 28) des moyens de visualisation (20) pour le réglage de dimension d'impact et du faisceau (2) de lumière de la source (S) étant partiellement confondus.

5. Dispositif de réglage selon la revendication 4, caractérisé en ce que les moyens (10) d'émission du faisceau (11) de réglage et de visualisation de l'impact de ce faisceau sont fixes et sont associés à des moyens (3, 4, 5) pour déplacer le support (17) de cible (1), parallèlement au faisceau (28) de la source et au faisceau de réglage.

6. Dispositif de réglage selon l'une quelconque des revendications 4 et 5, caractérisé en ce que la source (S) est une source de lumière monochromatique et que le faisceau (11) de réglage est un faisceau de lumière blanche.

7. Dispositif de réglage selon la revendication 6, caractérisé en ce que les moyens (20) de visualisation de la dimension de l'impact du faisceau de réglage (11) sur la cible sont associés aux moyens de focalisation (33) pour régler en lumière blanche la dimension de l'impact sur la cible (1).

8. Dispositif de réglage selon la revendication 7, caractérisé en ce que les moyens (20) de visualisation de la dimension d'impact sont associés à une lentille de correction (22) qui permet d'obtenir en lumière blanche, et grâce aux moyens de réglage (9, 18, 19, 30) des moyens de focalisation, la dimension prédéterminée de l'impact désiré dans la lumière monochromatique choisie.

9. Dispositif de réglage selon la revendication 8, caractérisé en ce que les moyens de visualisation (10) de la position de l'impact du faisceau de réglage (11) sur la cible (1) sont constitués par une première lunette de visée (31) associée à un objectif annulaire (15, 16), une source (14) de faisceau lumineux étant incorporée à cette lunette pour produire ledit faisceau de réglage en lumière blanche, les moyens de visualisation de la dimension de l'impact étant constitués par une deuxième lunette de visée (20) recevant l'image de l'impact du faisceau de réglage, à travers les moyens de focalisation (33), l'oculaire (22) de cette deuxième lunette étant muni de ladite lentille de correction.

10. Dispositif de réglage selon la revendication 9, caractérisé en ce que ledit objectif annulaire (15, 16) comprend un ensemble de deux miroirs sphériques annulaires disposées coaxialement sur le trajet du faisceau de réglage (11), de manière à focaliser ce faisceau sur la cible.

11. Dispositif de réglage selon la revendication 10, caractérisé en ce que la source (S) de lumière est une source laser comprenant, d'une part, un laser émettant un faisceau de lumière monochromatique de traitement de la cible, et d'autre part, un laser d'alignement émettant un faisceau de lumière visible spatialement confondu avec le faisceau de traitement, l'impact sur la cible du faisceau du laser d'alignement devant coïncider avec un réticule de la première lunette de visée (31).

12. Dispositif de réglage de l'impact sur une cible d'un faisceau de lumière émis par une source (S), comprenant un support de cible (17) et des moyens (3, 4, 5) pour le déplacer dans son plan, des moyens (33) de focalisation du faisceau de lumière de la source sur la cible (1), des moyens (10) d'émission d'un faisceau lumineux (11) de réglage en direction de la cible, des moyens optiques (10, 20) de visualisation pour localiser et pour régler la dimension de l'impact du faisceau de réglage, caractérisé en ce que les moyens (10) d'émission du faisceau de réglage et les moyens (10, 20) de visualisation de l'impact sont fixes et sont associés à des moyens (3, 4, 5) pour déplacer le support (17) de cible (1) parallèlement au faisceau (28) de la source et au faisceau de réglage.

13. Application du dispositif et du procédé conformes à l'une quelconque des revendications 1 à 12 à la spectrométrie laser.

## Claims

1. Process for controlling the impact on a target (1) of a light beam (2) emitted by a source (S) comprising controlling the position of the impact by using a position-control beam (11) whose optical trajectory is coaxial but not coincident with that of the beam from source (S) characterized in that it additionally comprises regulating the dimensions of the impact by using another beam (28) whose trajectory is coaxial and partially coincident with the beam (2) from the source.

2. Control process according to Claim 1 characterized in that the light beam (2) from the source (S) is monochromatic, the position and dimensions of the impact being controlled by white light, the optical trajectory of position-control beam (11) being coaxial but not coincident with the optical trajectory of the beam from source (S) and the optical trajectory of impact dimension-control beam (28) being partially coincident with the optical trajectory (2) of the beam from source (S).

3. Control process according to Claim 2 characterized in that interposed in the optical trajectory of dimension-control beam (28) is a correction lens (22) enabling the obtention, in white light, of the predetermined size of impact desired with the selected monochromatic light.

4. Apparatus for controlling the impact on a target of a beam of light emitted by a source (S), comprising a support (17) for target (1), and means (3, 4, 5) for adjusting its plane, focussing means (33) for focussing the beam (2) of light from source (S) on the target (1), control means (9, 18, 19, 30) for said focussing means, emission means (10) for a control light beam (11) in the direction of target (1), the location and dimensions of the impact of this control beam (11) on the target (1) corresponding to the predetermined location and dimensions of the impact of the light beam (2) from source (S), optical observation means (10, 20) to locate and control the dimensions of the impact of the control beam, characterized in that the means (10) for emitting the control beam (11) and observing the position of impact of this control beam on the target are independent of the focussing means (33) for the light beam from source (S), the optical pathways (2, 11) of the light beam from source (S) and the observation means (10) for the impact position being coaxial but not coincident, and the optical pathways (2, 28) of the observation means (20) for impact dimension-control and the light beam (2) from source (S) being partially coincident.

5. Control apparatus according to Claim 4 characterized in that the means (10) for emitting control beam (11) and observing the impact of the beam are fixed and are associated with means (3, 4, 5) for adjusting the support (17) of target (1), parallel to the beam (28) from the source and the control beam.

6. Control apparatus according to either of Claims 4 and 5, characterized in that the source (S) is a source of monochromatic light and that the control beam (11) is a beam of white light.

7. Control apparatus according to Claim 6 characterized in that the means (20) for observing the dimensions of the impact of the control beam (11) on the target are associated with focussing means (33) to control with white light the dimensions of the impact on the target (1).

8. Control apparatus according to Claim 7 characterized in that the means (20) for observing the impact dimensions are associated with a correction lens (22) which enables the obtention with white light, and, through control means (9, 18, 19, 30) for the focussing means, the predetermined impact dimensions desired for the selected monochromatic light.

9. Control apparatus according to Claim 8 characterized in that the observation means (10) for the impact position of control beam (11) on the target (1) comprise a first sight tube (31) associated with an annular objective (15, 16), a light beam source (14) being incorporated in said sight tube to produce said control beam of white light, the observation means for impact dimensions comprising a second sight tube (20) receiving the image of the impact of the control beam through focussing means (33), the eyepiece (22) of said second sight tube having said correction lens.

10. Control apparatus according to Claim 9 characterized in that said annular objective (15, 16) comprises an assembly of two annular spherical mirrors disposed coaxially with the trajectory of control beam (11) whereby to focus this beam on the target.

11. Control apparatus according to Claim 10 characterized in that the light source (S) is a laser source comprising, on the one hand, a laser emitting a beam of monochromatic light for treatment of the target and on the other hand, an alignment laser emitting a beam of visible light spatially coincident with the treatment beam, the impact of the laser beam on the target being brought into coincidence with a reticle of the first sight tube.

12. Apparatus for controlling the impact on a target of a light beam emitted by a source (S) comprising a target support (17) and means (3, 4, 5) for adjusting its plane, means (33) for focussing a light beam from the source on the target (1), means (10) for emitting a control light beam (11) towards the target, optical observation means (10, 20) to locate and control the dimensions of the impact of the control beam, characterized in that the means (10) for emitting the control beam and the means (10, 20) for observing the impact are fixed and associated with the means (3, 4, 5) for displacing the support (17) of the target (1) parallel to the beam (28) from the source and the control beam.

13. Application of the apparatus and of the process according to any one of Claims 1 to 12 to laser spectometry.

**Ansprüche**

1. Verfahren zum Bestimmen und Einstellen des Auftreffortes auf ein Target (1) eines von einer Lichtquelle (S) emittierten Lichtbündels (2), bei dem die Lage des Auftreffortes mit Hilfe eines Lichtbündels (11) zur Lagebestimmung bestimmt wird, welches koaxial mit dem Lichtbündel der Lichtquelle (S) ist, dieses aber nicht überlappt, dadurch gekennzeichnet, daß zusätzlich die Ausdehnung des Auftreffortes mit Hilfe eines weiteren Lichtbündels (28) bestimmt wird, das koaxial mit dem Lichtbündel (2) der Lichtquelle ist und dieses teilweise überlappt.

2. Verfahren nach Anspruch 1, dadurch gekennzeichnet, daß bei einem monochromatischen Lichtbündel (2) der Lichtquelle (S) die Lage und die Ausdehnung des Auftreffortes bei Weißlicht bestimmt werden, daß das Lichtbündel (11) zur Lagebestimmung koaxial mit dem Lichtbündel der Lichtquelle (S) ist, dieses jedoch nicht überlappt, und daß das Lichtbündel (28) zur Bestimmung der Ausdehnung des Auftreffortes den Strahlengang des Lichtbündels (2) der Lichtquelle (S) teilweise überlappt.

3. Verfahren nach Anspruch 2, dadurch gekennzeichnet, daß in den Strahlengang des Lichtbündels (28) zur Bestimmung der Ausdehnung eine Korrekturlinse (22) eingesetzt wird, mit der in Weißlicht die vorbestimmte Ausdehnung des Auftreffortes, der bei dem gewählten monochromatischen Licht gewünscht ist, erhalten werden kann.

4. Vorrichtung zum Bestimmen und Einstellen des Auftreffortes auf einem Target (1) eines von einer Lichtquelle (S) emittierten Lichtbündels, wobei die Vorrichtung eine Haltevorrichtung (17) für das Target (1), eine Einrichtung (3, 4, 5) zum Verschieben der Vorrichtung in deren Ebene, eine Fokussierungseinrichtung (33) für das Lichtbündel (2) der Lichtquelle (S) auf dem Target (1), eine Einstelleinrichtung (9, 18, 19, 30) für die Fokussierungseinrichtung, eine Einrichtung (10) zur Emission eines leuchtenden Einstellbündels (11) ein Richtung auf das Target (1), wobei die Lage und Ausdehnung des Auftreffortes dieses Einstellichtbündels auf dem Target (1) der vorbestimmten Lage und Ausdehnung des Auftreffortes des Lichtbündels (2) der Lichtquelle (S) entsprechen, sowie ferner optische Beobachtungseinrichtungen (10, 20) zum Lokalisieren und Bestimmen der Ausdehnung des Auftreffortes des Einstellichtbündels aufweist, dadurch gekennzeichnet, daß die Einrichtung (10) zur Emission des Einstellbündels (11) und die Beobachtungseinrichtungen für die Lage des Auftreffortes des Einstellbündels auf dem Target unabhängig von der Fokussierungseinrichtung (33) des Lichtbündels der Lichtquelle (S) sind, daß die optischen Strahlengänge (2, 11) des Lichtbündels der Quelle und der Beobachtungseinrichtungen (10) für die Lage des Auftreffortes koaxial sind, sich jedoch nicht überlappen, und daß die optischen Strahlengänge (2, 28) der Beobachtungseinrichtung (20) für die Bestimmung der Ausdehnung des Auftreffortes sowie des Lichtbündels (2) der Lichtquelle (S) sich teilweise überlappen.

5. Vorrichtung nach Anspruch 4, dadurch gekennzeichnet, daß die Einrichtung (10) zur Emission des Einstellbündels und die Beobachtungseinrichtung für den Auftreffpunkt dieses Lichtbündels fest und der Einrichtung (3, 4, 5) zum Verschieben der Haltevorrichtung (17) des Targets parallel zu dem Lichtbündel der Lichtquelle und zu dem Einstellbündel zugeordnet sind.

6. Vorrichtung nach einem der Ansprüche 4 und 5, dadurch gekennzeichnet, daß die Lichtquelle (S) eine Quelle monochromatischen Lichtes ist, und daß das Einstellbündel (11) ein Weißlichtbündel ist.

7. Vorrichtung nach Anspruch 6, dadurch gekennzeichnet, daß die Beobachtungseinrichtung (20) für die Ausdehnung des Auftreffortes des Einstellbündels (11) auf dem Target der Fokussierungseinrichtung (33) zugeordnet ist, um bei Weißlicht die Ausdehnung des Auftreffortes auf dem Target (1) zu bestimmen und einzustellen.

8. Vorrichtung nach Anspruch 7, dadurch gekennzeichnet, daß der Beobachtungseinrichtung (20) für die Dimension des Auftreffortes eine Korrekturlinse (22) zugeordnet ist, mit der in Weißlicht und mit Hilfe der Einstelleinrichtung (9, 18, 19, 30) für die Fokussierungseinrichtung die vorbestimmte Ausdehnung des Auftreffortes erhaltbar ist, die bei dem gewählten monochromatischen Licht erwünscht ist.

9. Vorrichtung nach Anspruch 8, dadurch gekennzeichnet, daß die Beobachtungseinrichtung (10) für die Lage des Auftreffortes des Einstellbündels (11) auf dem Target ein erstes Visierfernrohr (31) ist, das mit einem ringförmigen Objektiv (15, 16) ausgerüstet ist, daß eine Lichtquelle (14) für das leuchtende Einstellbündel in dem Visierfernrohr vorgesehen ist, um das Einstellichtbündel in Weißlicht zu erzeugen, daß die Beobachtungseinrichtung für die Ausdehnung des Auftreffortes durch ein zweites Visierfernrohr (20) gebildet ist, die das Bild des Auftreffortes des Einstellbündels über die Fokussierungseinrichtung (33) empfängt, und daß das Okkular (22) dieses zweiten Visierfernrohrs mit der Korrekturlinse (22) ausgerüstet ist.

10. Vorrichtung nach Anspruch 9, dadurch gekennzeichnet, daß das ringförmige Objektiv (15, 16) eine Anordnung aus zwei sphärischen Spiegeln aufweist, die ringförmig koaxial um den Strahlengang des Einstellbündels (11) angeordnet sind, um dieses Strahlenbündel auf dem Target zu fokussieren.

11. Vorrichtung nach Anspruch 10, dadurch gekennzeichnet, daß die Lichtquelle (S) eine Laserquelle ist, die einerseits einen Laser, der ein monochromatisches Lichtbündel zur Behandlung des Targets abstrahlt, und andererseits einen Richtlaser aufweist, der ein sichtbares Lichtbündel abstrahlt, das das Lichtbündel zur Behandlung des Targets räumlich überlappt, und daß der Auftreffort auf das Target des Ausrichtlichtbündels mit einem Fadenkreuz des ersten Visierfernrohres (31) zusammenfällt.

12. Vorrichtung zum Bestimmen und Einstellen des Auftreffortes auf einem Target eines von einer Lichtquelle (S) emittierten Lichtbündels, wobei die Vorrichtung eine Haltevorrichtung (17) für das Target, eine Einrichtung zum Verschieben dieser Vorrichtung in deren Ebene, eine Fokussierungseinrichtung (33) für das Lichtbündel der Lichtquelle auf dem Target (1), eine Einrichtung (10) zur Emission eines leuchtenden Einstellbündels (11) in Richtung auf das Target sowie ferner optische Beobachtungseinrichtungen (10, 20) zum Lokalisieren und Bestimmen der Ausdehnung des Auftreffortes des Einstellichtbündels aufweist, dadurch gekennzeichnet, daß die Einrichtung (10) zur Emission des Einstellbündels und die Beobachtungseinrichtungen (10, 20) für den Auftreffpunkt dieses Lichtbündels fest eingestellt und der Einrichtung (3, 4, 5) zum Verschieben der Haltevorrichtung (17) des Targets (1) parallel zu dem Lichtbündel (28) der Lichtquelle und zu dem Einstellbündel zugeordnet sind.

13. Anwendung der Vorrichtung und des Verfahrens gemäß einem der vorhergehenden Ansprüche 1 bis 12 auf die Laser-Spektrometrie.